# EUROPEAN PATENT APPLICATION

(11) **EP 2 637 450 A1**
(43) Date of publication of application: **11.09.2013**
(21) Application number: 11838070.8
(22) Date of filing: 02.11.2011
(51) Int. Cl.: H04W 36/14, H04W 36/28, H04W 48/18

(54) **MOBILE COMMUNICATIONS METHOD AND MOBILE MANAGEMENT NODE**

(30) Priority: 04.11.2010 JP 2010247946
(71) Applicant: NTT DOCOMO, INC., Chiyoda-ku Tokyo 100-6150 (JP)
(72) Inventor: NISHIDA, Katsutoshi, Tokyo 100-6150 (JP)
(74) Representative: HOFFMANN EITLE
(86) International application number: PCT/JP2011/075324
(87) International publication number: WO 2012/060420

(57) **Abstract**

A method of performing a handover according to the invention includes a step A of causing an MME to transmit "Forward Reloc Req" to an SGSN, and a step B of causing the MME to release a PS bearer which has been used for the voice communications and the packet communications of the UE#1 in the mobile transmission network accommodating the E-UTRAN, when detecting that a handover from E-UTRAN to UTRAN/GERAN for voice communications of a UE#1 is completed after detecting that establishment of a PS bearer is refused in the SGSN.

## Description

### TECHNICAL FIELD

The present invention relates to a mobile communication method and a mobility management node.

### BACKGROUND ART

Conventionally, there has been known a mobile communication system capable of accommodating radio access systems in the 2G/3G schemes (UTRAN: Universal Terrestrial Radio Access Network/GERAN: GSM EDGE Radio Access Network) and a radio access system (E-UTRAN: Evolved Universal Terrestrial Radio Access Network) in an LTE (Long Term Evolution) scheme.

In such mobile communication systems, there has been known a technology that switches a UE (User Equipment, a mobile station) #1 from a state of performing voice communications using a PS (Packet Switch) bearer to a state of performing voice communications using a CS (Circuit Switch) bearer, so that the voice communications of the UE#1 can be continued, i.e., "SRVCC (Single Radio Voice Call Continuity) " (see, Non-patent document 1). Fig. 6 shows an operation of the "SRVCC" in the mobile communication system.

### PRIOR ART DOCUMENT

### NON-PATENT DOCUMENT

Non-patent document 1: 3GPP TS23.216

### SUMMARY OF THE INVENTION

### PROBLEMS TO BE SOLVED BY THE INVENTION

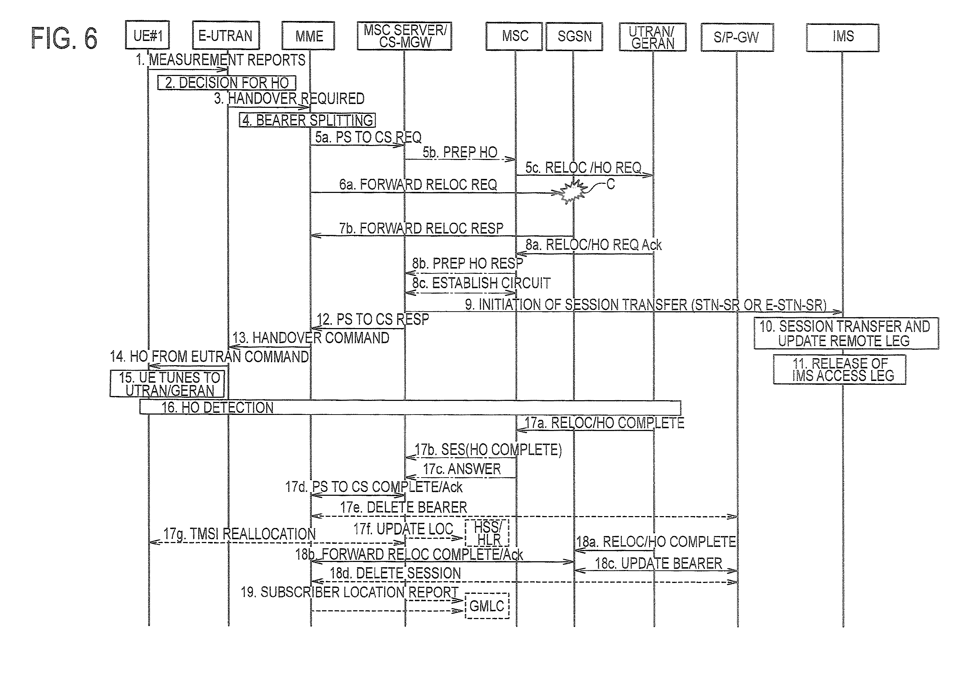

However, in the operation of the "SRVCC, " as shown in Fig. 6, at Step C, for example, in a case where an SGSN (Serving GPRS Support Node, a packet switch) in UTRAN/GERAN in a handover target determines that a PS bearer to be used for packet communications of a UE#1 is not established, i.e., where it is determined that packet communications is not permitted after tuning to the UTRAN/GERAN for the packet communications of the UE#1, how to perform the operation is not specified.

Accordingly, in that case, there is a problem such that the "SRVCC" might fail.

For this reason, the present invention has been made in view of the foregoing problem. Accordingly, an object of the present invention is to provide a mobile communication method and a mobility management node, in which a PS network can determine that the packet communications is not permitted after tuning to the UTRAN/GERAN for the packet communications of the UE#1 in the "SRVCC."

### MEANS FOR SOLVING THE PROBLEM

A first characteristic of the present invention is a method of performing a handover of a mobile station performing voice communications and packet communications using a packet switched bearer via a radio access network apparatus in a first communication scheme which does not support a circuit switching communication, the method including: a step A of causing a mobility management node accommodating the radio access network apparatus in the first communication scheme to transmit a resource securing signal for a packet switched bearer requesting securing of a resource for the packet switched bearer used for the packet communications to a packet switch in a second communication scheme supporting a circuit switch communication; a step B of causing the mobility management node to release the packet switched bearer which has been used for the voice communications and the packet communications in a core network in the first communication scheme, when detecting that a handover from a radio access network in the first communication scheme to a radio access network in the second communication scheme for the voice communications is completed after detecting that establishment of the packet switched bearer is refused in the packet switch in the second communication scheme.

A second characteristic of the present invention is a mobility management node accommodating a radio access network in a first communication scheme in a mobile communication system capable of performing a handover of a mobile station performing voice communications and packet communications using a packet switched bearer via a radio access network apparatus in a first communication scheme which does not support a circuit switch communication, wherein the mobility management node is configured to transmit a resource securing signal for a packet switched bearer requesting securing of a resource for a packet switched bearer used for the packet communications to a packet switch in a second communication scheme supporting the circuit switch communication, and is configured to release the packet switched bearer which has been used for the voice communications and the packet communications in a core network in the first communication scheme when detecting that a handover from the radio access network in the first communication scheme to a radio access network in the second communication scheme for the voice communications is completed after detecting that establishment of the packet switched bearer is refused in the packet switch in the second communication scheme.

### EFFECTS OF THE INVENTION

As described above, the present invention can provide a mobile communication method and a mobility management node, in which a PS network can determine that packet communications is not permitted after tuning to UTRAN/GERAN for packet communications of a UE#1 in "SRVCC."

### BRIEF DESCRIPTION OF DRAWINGS

[Fig. 1] Fig. 1 is an overall configuration diagram of a mobile communication system according to a first embodiment of the invention.
[Fig. 2] Fig. 2 is a sequential diagram illustrating an operation of the mobile communication system according to the first embodiment of the invention.
[Fig. 3] Fig. 3 is a sequential diagram illustrating an operation of the mobile communication system according to the first embodiment of the invention.
[Fig. 4] Fig. 4 is a sequential diagram illustrating an operation of the mobile communication system according to the first embodiment of the invention.
[Fig. 5] Fig. 5 is a sequential diagram illustrating an operation of a mobile communication system according to Modification 1 of the invention.
[Fig. 6] Fig. 6 is a sequential diagram illustrating an operation of a conventional mobile communication system.

### MODE FOR CARRYING OUT THE INVENTION

### (Mobile Communication System According to First Embodiment of the Invention)

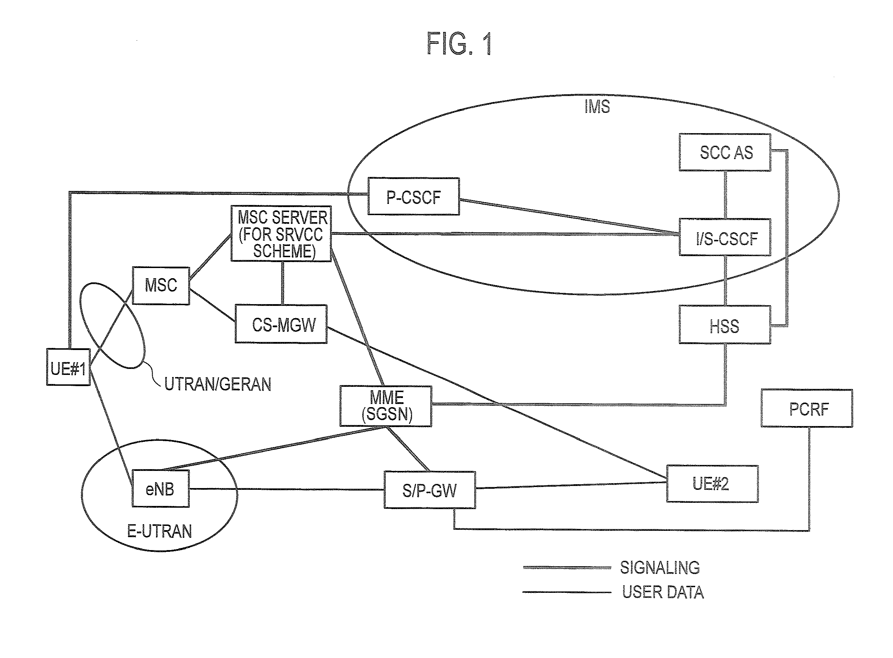

Referring to Fig. 1 to Fig. 4, a mobile communication system according to a first embodiment of the invention is described.

As shown in Fig. 1, a mobile communication system according to the present embodiment includes an EPS (Evolved Packet System) having E-UTRAN and a mobile transmission network, a 2G/3G scheme system having GERAN/UTRAN and a core network, and an IMS (IP Multimedia Subsystem, a service control network).

In the E-UTRAN, an eNB (radio access network apparatus) is disposed, and in the GERAN/UTRAN, a RNC/BSS (radio access network apparatus) is disposed.

In the mobile transmission network, there are disposed an MME (Mobility Management Entity, mobility management node), an S-GW (Serving-Gateway, serving gateway apparatus), a P-GW (PDN-Gateway, packet data network gateway apparatus), a PCRF (Policy and Charging Rules Function, a policy controller), and an HSS (Home Subscriber Server, a subscriber management server)/HLR (Home Location Register) (unillustrated).

In the 2G/3G scheme core network, there are disposed an MSC (Mobile-service Switching Center, a circuit switch), an SGSN, an MSC server for the SRVCC scheme, and a CS-MGW (Circuit Switch-Media Gateway, and a media gateway apparatus for a circuit switch).

In the IMS, there are disposed an SCC AS (Service Centralization and Continuity Application Server), an I/S-CSCF (Interrogating/Serving Call Session Control Function), a P-CSCF (Proxy Call Session Control Function) and the like.

Also, the mobile communication system according to the embodiment is configured so that the UE#1 can be switched from a state of performing voice communications using a PS bearer via the E-UTRAN and the mobile transmission network to a state of performing voice communications using a CS bearer via the UTRAN/GERAN and the core network, i.e., a handover for the voice communications of the UE#1 is performed, whereby "SRVCC" is achieved.

Here, the mobile communication system according to the embodiment is configured to perform a handover for the voice communications of the UE#1 and also a handover for the packet communications of the UE#1.

In other words, the mobile communication system according to the embodiment is configured so that the UE#1 can be switched from a state of performing packet communications using a PS bearer via the E-UTRAN and the mobile transmission network to a state of performing packet communications using a PS bearer via the UTRAN/GERAN and the core network.

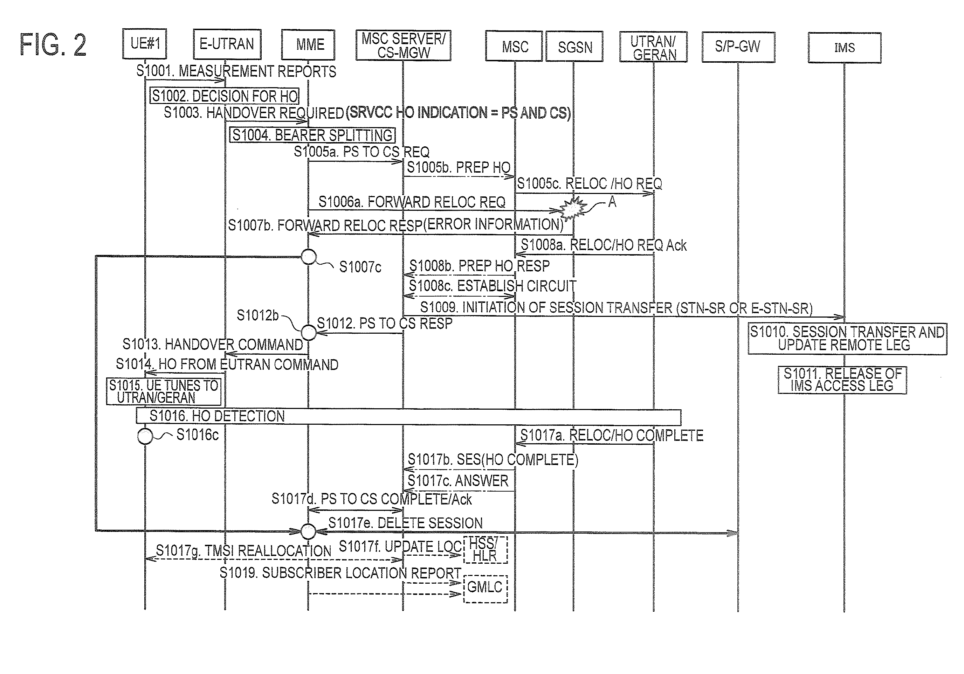

Hereinafter, referring to Figs. 2 to 4, an operation of the mobile communication system according to the embodiment is specifically described.

It is assumed herein that the UE#1 is in a state of performing voice communications and packet communications using a PS bearer via E-UTRAN and a mobile transmission network.

As shown in Fig. 2, at Step S1001, the UE#1 transmits "Measurement Report" to an eNB in the E-UTRAN.

At Step S1002, the eNB determines that a radio access network of the UE#1 in a connection destination is switched from the E-UTRAN to the UTRAN/GERAN, i.e., a handover from the E-UTRAN to the UTRAN/GERAN is performed for the voice communications and the packet communications of the UE#1.

Here, the eNB may be configured to determine that a handover is performed for the voice communications and the packet communications of the UE#1 in a case where the RNC/BSS in the handover target supports a PS HO.

At Step S1003, the eNB transmits "Handover Required" containing "SRVCC HO Indication = PS and CS" instructing that a handover is performed for the voice communications and the packet communications of the UE#1, to the MME.

At Step S1004, the MME performs "Bearer Splitting", i.e., classifies the PS bearer which is used for the voice communications of the UE#1 and the PS bearer which is used for the packet communications of the UE#1.

At Step S1005a, the MME transmits "PS to CS Req" to the MSC server/CS-MGW.

At Step S1005b, the MSC server/CS-MGW transmits "Prep HO" to the MSC, and at Step S1005c, the MSC transmits "Reloc/HO Req" to the RNC/BSS in the UTRAN/GERAN.

Here, the "PS to CS Req (Step S1005a)," "Prep HO (Step S1005b)," and "Reloc/HO Req (Step S1005c, for the CS bearer)" are resource securing signals for a CS bearer, which request securing of the resources for the CS bearer which is used for the voice communications of the UE#1.

In addition, at Step S1006a, the MME transmits "Forward Reloc Req" to the SGSN. Here, "Forward Reloc Req" is a resource securing signal for a PS bearer, which requests securing of the resources for the PS bearer which is used for the packet communications of the UE#1.

Note that at Step S1006a, a PS bearer other than the PS bearer which has been used for the voice communications of the UE#1, i.e., a context (Context) for the packet communications of the UE#1 is notified from the MME to the SGSN.

Here, at step A, based on the operator policies or the like, the SGSN determines that a PS bearer which is used for the packet communications of the UE#1 is not established, i.e., the packet communications is not permitted after tuning to the UTRAN/GERAN for the packet communications of the UE#1.

In such a case, the SGSN transmits "Forward Reloc Resp" containing error information to the MME at Step S1007b, without transmitting the "Reloc/HO Req" to the RNC/BSS.

Here, the error information may be information clearly demonstrating that the PS bearer cannot be established.

At Step S1007c, based on the predetermined error information contained in the received "Forward Reloc Resp, " the MME detects that the establishment of the PS bearer is refused in the SGSN and stores PS bearer establishment incapability information indicating the above (or that the PS bearer is a target of being deleted when a handover relating to the "SRVCC" has succeeded).

Note that, the MME may activate a predetermined timer when the "Forward Reloc Req" is transmitted. If the "Forward Reloc Resp" is not received before the predetermined timer expires, at Step S1007c, the MME may regard that the establishment of the PS bearer is refused in the SGSN and store the PS bearer establishment incapability information.

At Step S1008a, the RNC/BSS transmits "Reloc/ HO Req Ack (for a CS bearer)" to the MSC, and at Step S1008b, the MSC transmits "Prep HO Resp" to the MSC server/CS-MGW, and at Step S1008c, a circuit is established between the MSC server/CS-MGW and the MSC.

At Step S1009, the MSC server/CS-MGW transmits "Initiation of Session Transfer (STN-SR or E-STN-SR)" to the SCC AS in the IMS, and at steps S1010 and S1011, the SCC AS performs processing shown in Fig. 2.

At Step S1012, the MSC server/CS-MGW transmits "PS to CS Resp" to the MME.

Here, the "Reloc/HO Req Ack (Step S1008a (for a CS bearer), " "Prep HO Resp (Step S1008b), " and "PS to CS Resp (Step S1012)" are response signals for a CS bearer, which indicate that the resources for the CS bearer which is used for the voice communications of the UE#1 are secured.

Even if the "Forward Reloc Resp" containing the predetermined error information is received at Step S1007b, when the "PS to CS Resp" is received at Step S1012, the MME transmits "Handover Command" instructing a handover from the E-UTRAN to the UTRAN/GERAN for only the voice communications of the UE#1.

At Step S1014, the eNB transmits "HO from EUTRAN command" instructing a handover from the E-UTRAN to the UTRAN/GERAN for only the voice communications of the UE#1 to the UE#1.

At Step S1015, the UE#1 switches the radio access network in the connection destination from the E-UTRAN to the UTRAN/GERAN.

At Step S1016, the processing of switching the radio access network in the connection destination of the UE#1 from the E-UTRAN to the UTRAN/GERAN is performed in the eNB, the RNC/BSS, and the like.

At Step S1016c, the UE#1 establishes a radio bearer relating to the CS bearer which is used for the voice communications and performs location registration processing for the UTRAN/GERAN.

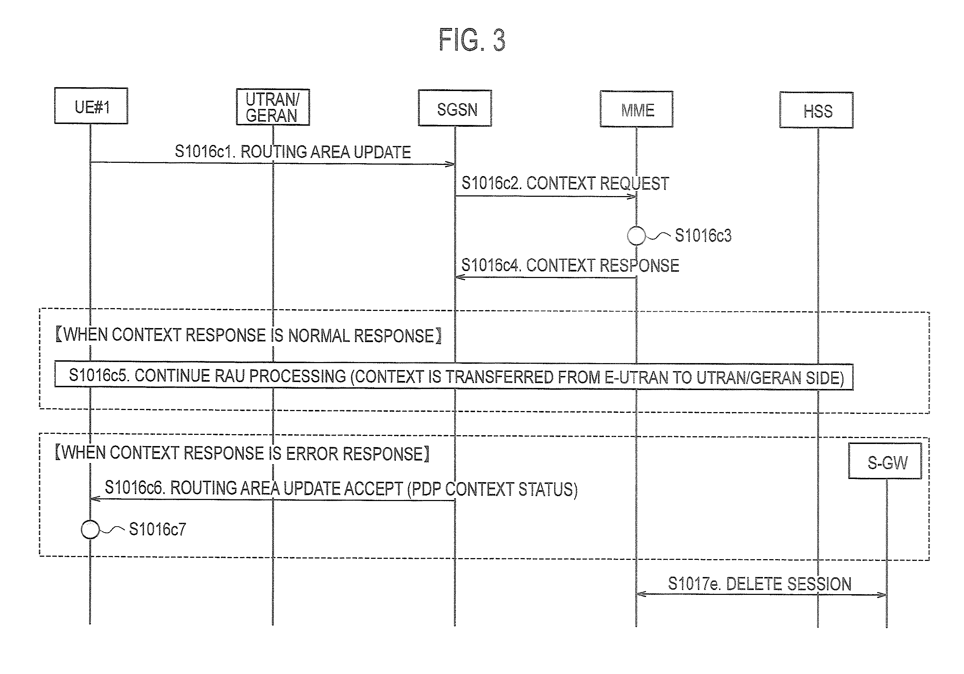

Specifically, as shown in Fig. 3, at Step S1016c1, the UE#1 transmits "Routing Area Update" to the SGSN, and at Step S1016c2, the SGSN transmits "Context Request" requesting transfer of the context relating to the UE#1 to the MME.

In the example of Fig. 3, it is assumed that the MME receives the "Context Request" before the context relating to the PS bearer is deleted at Step S1017e.

At Step S1016c3, the MME determines as to whether the context relating to the UE#1 is to be transferred to the SGSN based on the operator policies, or as to whether the "PS to CS Complete (Step S1017d)" is received, or a type of the error information received at S1007c.

When it is determined that the context relating to the UE#1 is to be transferred, at Step S1016c4, the MME transmits "Context Response" containing the context relating to the PS bearer which has been used for the packet communications of the UE#1 to the SGSN.

Then, at Step S1016c5, the RAU processing of the UE#1 is performed. The RAU processing allows the PS bearer which has been used for the packet communications of the UE#1 in the mobile transmission network accommodating the E-UTRAN to be taken over to the core network accommodating the UTRAN/GERAN. In other words, after that, the UE#1 can continue the packet communications with the PS bearer.

In such a case, the RAU processing deletes the held context relating to the PS bearer which has been used for the voice communications of the UE#1.

On the other hand, when it is determined that the context relating to the UE#1 is not to be transferred (e.g., when the SGSN notifies predetermined error information indicating that the establishment of the PS bearer is refused), at Step S1016c4, the MME transmits "Context Response" indicating that the context relating to the UE#1 is not held, to the SGSN.

Note that predetermined information indicating that the takeover of the PS bearer is incapable may be set in the "Context Response."

At Step S1016c6, the SGSN transmits "Routing Area Update Accept" containing "PDP context Status" indicating that the context relating to the UE#1 is not held, to the UE#1.

At Step S1016c7, the UE#1 deletes all of the held contexts relating to the PS bearer of the UE#1 (including the PS bearer which has been used for the voice communications of the UE#1).

In that case, as described later, at Step S1017e, "Delete Session" is performed for releasing the PS bearer which has been used for the voice communications and the packet communications of the UE#1 between the MME and the S/P-GW.

Returning to Fig. 2, at Step S1017a, the RNC/BSS transmits "Reloc/ HO Complete" to the MSC, and at Step S1017b, the MSC transmits "SES (HO Complete)" to the MSC server/CS-MGW, and at Step S1017c, transmits "ANSWER."

At Step S1017d, the "PS to CS Complete/Ack" is transmitted/received between the MSC server/CS-MGW and the MME.

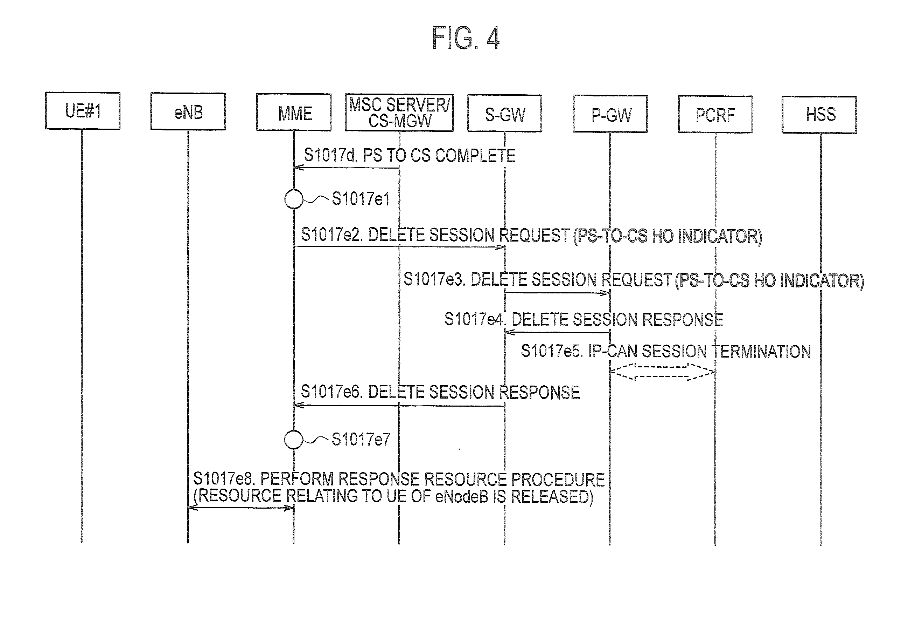

At Step S1017e, "Delete Session" relating to the PS bearer which has been used for the voice communications and the packet communications of the UE#1 is performed between the MME and the S/P-GW. Here, referring to Fig. 4, "Delete Session" is described.

As shown in Fig. 4, at Step S1017d, the MME receives the "PS to CS Complete" from the MSC server/CS-MGW, and at Step S1017e1, when it is detected that the switching from the PS bearer for the voice communications of the UE#1 to the CS bearer has succeeded, at Step S1017e2, the MME transmits "Delete Session Request" requesting release of the PS bearer of the UE#1 to the S-GW.

Here, the "Delete Session Request" may contain the "PS-to-CS HO Indicator" indicating that the PS bearer in the "SRVCC" is released.

At Step S1017e3, the S-GW transmits "Delete Session Request" containing the "PS-to-CS HO Indicator" to the P-GW.

At Step S1017e4, the P-GW deletes the context relating to the PS bearer of the UE#1 and transmits the "Delete Session Response" to the S-GW.

Here, at Step S1017e5, "IP-CAN Session Termination" is performed between the P-GW and the PCRF. Here, the PCRF may be notified of the release of the PS bearer in the "SRVCC."

At Step S1017e6, the S-GW deletes the context relating to the PS bearer of the UE#1 and transmits "Delete Session Response" to the MME.

At Step S1017e7, the MME does not transmit a disconnection signal relating to the PS bearer of the UE#1 to the UE#1, and at Step S1017e8, "Release Resource" for releasing the resource relating to the PS bearer of the UE#1 in the eNB is performed.

Returning to Fig. 2, at Step S1017f, the MSC server/CS-MGW transmits "UpdateLoc" to the HSS/HLR.

At Step S1017g, "TMSI Reallocation" is performed between the UE#1 and the MSC serve/CS-MGW.

At Step S1019, the MME and the MSC server/CS-MGW transmits "Subscriber Location Report" to the GMLC.

The mobile communication system according to the embodiment can release the PS bearer which has been used for the voice communications and the packet communications of the UE#1 in the mobile transmission network accommodating the E-UTRAN when detecting that a handover from the E-UTRAN to the UTRAN/GERAN for the voice communications of the UE#1 is completed after the MME detects that the establishment of the PS bearer is refused in the SGSN.

The mobile communication system according to the embodiment can be such that the SGSN determines that packet communications is not permitted after tuning to the UTRAN/GERAN for the packet communications of the UE#1 in the "SRVCC".

### (Modification 1)

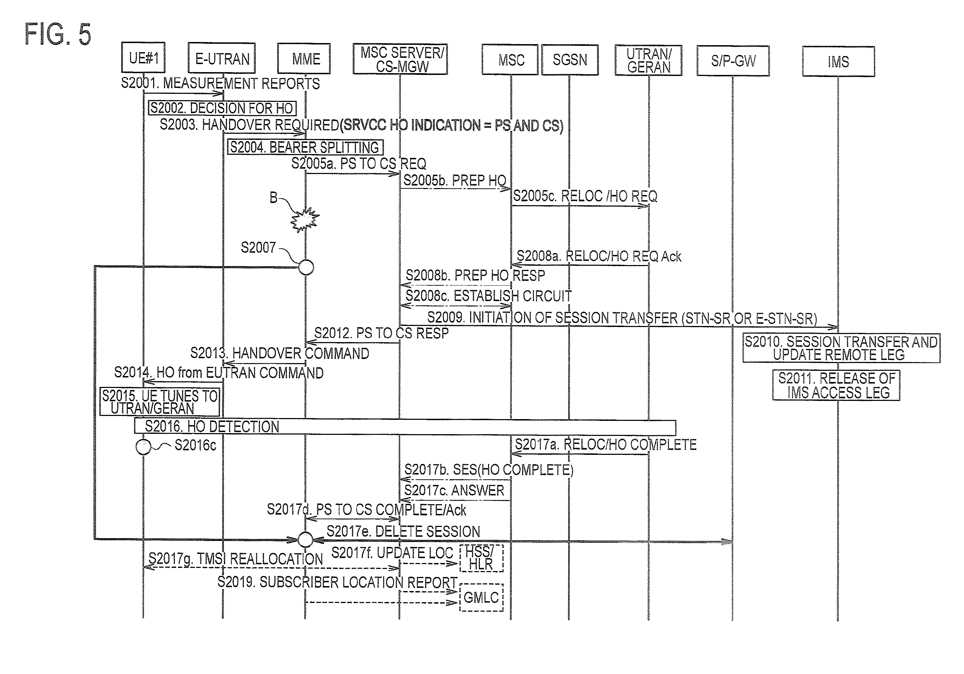

Referring to Fig. 5, a mobile communication system according to Modification 1 of the invention is described. Hereinafter, a mobile communication system according to Modification 1 is described by paying attention to a difference from the mobile communication system according to the first embodiment.

As shown in Fig. 5, an operation of steps S2001 to S2005c is same as that of steps S1001 to S1005c shown in Fig. 2.

At step B, based on the operator policies or the like, an MME determines that a PS bearer which is used for packet communications of a UE#1 is not established, i.e., that the packet communications is not permitted after tuning to UTRAN/GERAN for the packet communications of the UE#1.

In that case, at Step S2007, the MME stores PS bearer establishment incapability information indicating that the establishment of the PS bearer is refused (or the PS bearer is a target of being deleted when a handover relating to the "SRVCC" has succeeded) without transmitting the "Forward Reloc Req" to the SGSN.

Hereinafter, the operation of Steps S2008a to S2019 is same as that of Steps S1008a to S10019 shown in Fig. 2.

### (Modification 2)

Note that the mobile communication system according to the first embodiment and Modification 1 may be configured so that a UE#1 is switched from a state of performing voice communications using a PS bearer via E-UTRAN and a mobile transmission network to a state of performing voice communications using a CS bearer via UTRAN/GERAN and a core network by using the "SRVCC improved method" specified in the "3GPP TS23.237" in place of the "SRVCC".

The characteristics of the embodiment described above may be expressed as follows:

A first characteristic of the embodiment is a method of performing a handover of a UE#1 (mobile station) being performing voice communications and packet communications using a PS bearer (packet switched bearer) via an eNB (radio access network apparatus in a first communication scheme which does not support a circuit switch communication), the method includes: a step A of causing an MME (mobility management node accommodating a radio access network in the first communication scheme) to transmit "Forward Reloc Req (resource securing signal for a packet switched bearer requesting securing of a resource for the packet switched bearer used for the packet communications)" to an SGSN (packet switch in a second communication scheme supporting a circuit switch communication) ; and a step B of causing the MME to release the PS bearer which has been used for the voice communications and the packet communications of the UE#1 in a mobile transmission network accommodating E-UTRAN (core network in the first communication system) when detecting that a handover from the E-UTRAN to UTRAN/GERAN for the voice communications is completed after detecting that establishment of the PS bearer is refused in the SGSN.

The first characteristic of the embodiment may comprise a step of causing the MME to store PS bearer establishment incapability information (packet switched bearer establishment incapability information) when detecting that the establishment of the bearer is refused in the SGSN, the establishment incapability information indicating the detection, wherein in the step B, when receiving "PS to CS Complete (handover completion signal indicating that the handover is completed)" with the PS bearer establishment incapability information being stored, the MME may transmit "Delete Session Request (bearer release request signal)" requesting release of the PS bearer which has been used for the voice communications and the packet communications of the UE#1 to an S-GW (gateway apparatus in the first communication scheme).

The first characteristic of the embodiment may comprise the steps of: causing the UE#1 to transmit "Routing Area Update (location registration request signal)" to the SGSN when performing a handover for the voice communications; causing the SGSN to transmit "Context Request (context request signal)" requesting transfer of a context relating to the UE#1 to the MME when receiving the "Routing Area Update"; and causing the MME to transfer a context relating to a PS bearer which has been used for the packet communications of the UE#1 to the SGSN when receiving the "Context Request" before receiving the "PS to CS Complete".

The first characteristic of the embodiment may comprise the steps of: causing the UE#1 to transmit "Routing Area Update" to the SGSN when performing a handover for the voice communications; causing the SGSN to transmit "Context Request" requesting transfer of a context relating to the UE#1 to the MME when receiving the "Routing Area Update"; and causing the MME to transmit "Context Response (context response signal)" indicating that the context relating to the UE#1 is not held to the SGSN, and to transmit "Delete Session Request" requesting release of the PS bearer which has been used for the voice communications and the packet communications of the UE#1 to the S-GW, when receiving the "Context Request" before receiving the "PS to CS Complete".

A second characteristic of the embodiment is an MME in a mobile communication system capable of performing a handover of a UE#1 being performing voice communications and packet communications using a PS bearer via an eNB, wherein the MME is configured to transmit "Forward Reloc Req" requesting securing of a resource for a PS bearer used for the packet communications of the UE#1 to an SGSN, and is configured to release the PS bearer which has used for the voice communications and the packet communications of the UE#1 in a mobile transmission network when detecting that a handover from E-UTRAN to E-UTRAN/GERAN for the voice communications of the UE#1 is completed after detecting that establishment of the PS bearer is refused in the SGSN.

In the second characteristic of the embodiment, the MME may be configured to store PS bearer establishment incapability information when detecting that the establishment of the PS bearer is refused in the SGSN, and is configured to transmit "Delete Session Request" requesting release of the PS bearer which has been used for the voice communications and the packet communications of the UE#1 to the S-GW when receiving the "PS to CS Complete" with the PS bearer establishment incapability information being stored.

In the second characteristic of the embodiment, the MME maybe configured to transfer a context relating to the PS bearer which has been used for the packet communications of the UE#1 to the SGSN when receiving "Context Request" requesting transfer of the context relating to the UE#1 from the SGSN before receiving the "PS to CS Complete".

In the second characteristic of the embodiment, the MME may be configured to transmit "Context Response" indicating that the context relating to the UE#1 is not held to the SGSN, and to transmit "Delete Session Request" requesting release of the PS bearer which has been used for the voice communications and the packet communications of the UE#1 to the S-GW, when receiving the "Context Request" requesting transfer of the context relating to the UE#1 from the SGSN before receiving the "PS to CS Complete".

Note that the operations of the UE#1, UE#2, UTRAN/GERAN (RNC/NodeB/BSS), MSC, MSC server, CS-MGW, SGSN, E-UTRAN (eNB), MME, S-GW, P-GW, P-CSCF, I/S-CSCF, SCC AS, PCRF may be implemented by a hardware or may be implemented by a software module executed by a processor, or may be implemented by the combination thereof.

The software module may be provided in any form of recording medium such as a RAM (Random Access Memory), flash memory, ROM (Read Only Memory), EPROM (Erasable Programmable ROM), EEPROM (Electronically Erasable and Programmable ROM), register, hard disk, removable disk, or CD-ROM.

Such recording medium is connected to the processor so that the processor can read or write information on the medium. In addition, the recording medium may be integrated into the processor. Also, the recording medium and the processor may be provided inside ASIC. Such ASIC may be provided in the UE#1, UE#2, UTRAN/GERAN (RNC/NodeB/BSS), MSC, MSC server, CS-MGW, SGSN, E-UTRAN (eNB), MME, S-GW, P-GW, P-CSCF, I/S-CSCF, SCC AS, or PCRF. In addition, the recording medium and the processor may be provided as a discrete component in the UE#1, UE#2, UTRAN/GERAN (RNC/NodeB/BSS), MSC, MSC server, CS-MGW, SGSN, E-UTRAN (eNB), MME, S-GW, P-GW, P-CSCF, I/S-CSCF, SCC AS, or PCRF.

As described above, the present invention has been described in detail using the above embodiments. It is apparent for those who are in the art that the invention is not limited to the embodiments described herein. The invention can be implemented as modifications and amendments without departing from the spirit and scope of the invention, which is defined by the description of the scope of claims. Accordingly, the description is intended to illustratively describe the invention and is not intended to limit the invention.

### EXPLANATION OF THE REFERENCE NUMERALS

UE#1, UE#2... mobile station
E-UTRAN, UTRAN/GERAN... radio access network apparatus
RNC, NodeB, BSS, eNB... radio access network apparatus
MSC... circuit switch
S-GW, P-GW... gateway apparatus
MME... mobility management node

## Claims

1. A method of performing a handover of a mobile station performing voice communications and packet communications using a packet switched bearer via a radio access network apparatus in a first communication scheme which does not support a circuit switching communication, the method comprising:
a step A of causing a mobility management node accommodating the radio access network apparatus in the first communication scheme to transmit a resource securing signal for a packet switched bearer requesting securing of a resource for the packet switched bearer used for the packet communications to a packet switch in a second communication scheme supporting a circuit switch communication;
a step B of causing the mobility management node to release the packet switched bearer which has been used for the voice communications and the packet communications in a core network in the first communication scheme, when detecting that a handover from a radio access network in the first communication scheme to a radio access network in the second communication scheme for the voice communications is completed after detecting that establishment of the packet switched bearer is refused in the packet switch in the second communication scheme.

2. The method of performing a handover according to claim 1, comprising a step of causing the mobility management node to store packet switched bearer establishment incapability information when detecting that the establishment of the packet switched bearer is refused in the packet switch in the second communication scheme, the packet switched bearer establishment incapability information indicating the detection, wherein
in the step B, when receiving a handover completion signal indicating that the handover is completed with the packet switched bearer establishment incapability information being stored, the mobility management node transmits a bearer release request signal requesting release of the packet switched bearer which has been used for the voice communications and the packet communications to a gateway apparatus in the first communication scheme.

3. The method of performing a handover according to claim 1, comprising the steps of:
causing the mobile station to transmit a location registration request signal to the packet switch in the second communication scheme when performing the handover;
causing the packet switch in the second communication scheme to transmit a context request signal requesting transfer of a context relating to the mobile station to the mobility management node when receiving the location registration request signal; and
causing the mobility management node to transfer a context relating to the packet switched bearer which has been used for the packet communications to the packet switch in the second communication scheme when receiving the context request signal before receiving a handover completion signal indicating that the handover is completed.

4. The method of performing a handover according to claim 1, comprising the steps of:
causing the mobile station to transmit a location registration request signal to the packet switch in the second communication scheme when performing the handover;
causing the packet switch in the second communication system to transmit a context request signal requesting transfer of a context relating to the mobile station to the mobility management node, when receiving the location registration request signal; and
causing the mobility management node to transmit a context response signal indicating that a context relating to the mobile station is not held to the packet switch in the second communication scheme, and to transmit a bearer release request signal requesting release of the packet switched bearer which has been used for the voice communications and the packet communications to a gateway apparatus in the first communication scheme, when receiving the context request signal before receiving the handover completion signal indicating that the handover is completed.

5. A mobility management node accommodating a radio access network in a first communication scheme in a mobile communication system capable of performing a handover of a mobile station performing voice communications and packet communications using a packet switched bearer via a radio access network apparatus in a first communication scheme which does not support a circuit switch communication, wherein
the mobility management node
is configured to transmit a resource securing signal for a packet switched bearer requesting securing of a resource for a packet switched bearer used for the packet communications to a packet switch in a second communication scheme supporting the circuit switch communication, and
is configured to release the packet switched bearer which has been used for the voice communications and the packet communications in a core network in the first communication scheme when detecting that a handover from the radio access network in the first communication scheme to a radio access network in the second communication scheme for the voice communications is completed after detecting that establishment of the packet switched bearer is refused in the packet switch in the second communication scheme.

6. The mobility management node according to claim 5,
wherein
the mobility management node
is configured to store packet switched bearer establishment incapability information when detecting that the establishment of the packet switched bearer is refused in the packet switch in the second communication scheme, the packet switched bearer establishment incapability information indicating the detection, and
is configured to transmit a bearer release request signal requesting release of the packet switched bearer which has been used for the voice communications and the packet communications to a gateway apparatus in the first communication scheme, when receiving a handover completion signal indicating that the handover is completed, with the packet switched bearer establishment incapability information being stored.

7. The mobility management node according to claim 5, wherein the mobility management node is configured to transfer a context relating to the packet switched bearer which has been used for the packet communications to the packet switch in the second communication scheme, when receiving the context request signal requesting transfer of the context relating to the mobile station from the packet switch in the second communication scheme before receiving a handover completion signal indicating that the handover is completed.

8. The mobility management node according to claim 5,
wherein
the mobility management node is configured to transmit a context response signal indicating that a context relating to the mobile station is not held to the packet switch in the second communication scheme, and to transmit a bearer release request signal requesting release of the packet switched bearer which has been used for the voice communications and the packet communications to a gateway apparatus in the first communication scheme, when receiving a context request signal requesting transfer of the context relating to the mobile station from the packet switch in the second communication scheme before receiving the handover completion signal indicating that the handover is completed.
